# EUROPÄISCHE PATENTSCHRIFT

(11) **EP 0 388 605 B1**
(45) Veröffentlichungstag und Bekanntmachung des Hinweises auf die Patenterteilung: **01.06.1994**
(21) Anmeldenummer: 90101953.9
(22) Anmeldetag: 01.02.1990
(51) Int. Cl.: A21B 1/28

(54) **Backofen**
Baking oven
Four de boulangerie

(30) Priorität: 22.03.1989 DE 3909365
(43) Veröffentlichungstag der Anmeldung: 26.09.1990
(73) Patentinhaber: Werner & Pfleiderer GmbH, 70469 Stuttgart (DE)
(72) Erfinder: Nghiem, Luong, Dr., D-7140 Ludwigsburg (DE); Schröder, Helmut, Dipl.-Ing. (FH), D-7120 Bietigheim-Bissingen (DE)
(74) Vertreter: Rau, Manfred, Dr. Dipl.-Ing.

(56) Entgegenhaltungen:
- EP-A- 0 093 179
- DE-A- 2 418 067
- DE-B- 2 415 509

## Beschreibung

Die Erfindung betrifft einen Backofen nach dem Oberbegriff des Anspruches 1.

Ein derartiger aus der DE-AS 21 25 469 bekannter Backofen ist als Etagenofen ausgebildet und arbeitet in der üblichen Weise mit Heizgas-Umwälzung. Ein Grundproblem dieser von ihrem Aufbau her besonders einfachen und deshalb vorteilhaften Backöfen liegt darin, daß trotz Aufheizens auf eine für den Beginn des Backvorganges, also beim Einschießen der Teigstücke, gewünschte Temperatur diese in der Anfangsphase extrem stark abfällt. Anschließend wird sie um einen der sogenannten Ausbacktemperatur entsprechenden Wert durch wiederholtes Ein- und Ausschalten des Brenners geregelt. Unter der Ausbacktemperatur versteht man hierbei die beim Backende, also unmittelbar vor der Entnahme des fertiggebackenen Backgutes aus dem Backraum, herrschende Temperatur.

Aus der DE-U 83 3o 2o4 ist ein Backofen - ebenfalls der gattungsgemäßen Art - bekannt, wobei die Backplatte einerseits und die obere Strahlungsplatte andererseits aus Stein- oder Betonplatten mit großer Wärmekapazität bestehen, so daß bei diesem Ofen das Speicherverhalten eines sogenannten Steinofens erreicht wird, bei dem die gesamte zum Backen eines bestimmten Backgutes erforderliche Wärme vor dem Einschießen der Teigstücke gespeichert und dann während des Backvorganges unter langsamem Temperaturabfall stetig abgegeben wird. Derartige bekannte Öfen sind zum einen wegen der Stein- bzw. der Betonplatten zumindest gewichtsautwendig. Sie sind jeweils nur für ein bestimmtes Backgut optimiert und daher für die ständig wechselnden Backanforderungen eines normalen Backbetriebes nur begrenzt geeignet.

Weiterhin sind auch als Etagenöfen ausgebildete Backöfen bekannt, bei denen als Wärmeübertragungsmedium Öl eingesetzt wird, das eine verhältnismäßig große Wärmekapazität hat. Durch dieses Wärmespeichervermögen des Öles wird auch eine gewisse Verstetigung des Temperaturverlaufes und Temperaturabfalls über der Backzeit ermöglicht, wobei auch dieses System relativ träge ist und einen verhältnismäßig hohen Aufwand erfordert.

Aus der DE-A-2 418 067 ist ein Etagenbackofen bekannt, der dem Oberbegriff des Anspruches 1 entspricht. Dieser Backofen kann zum Aufheizen mit erhöhter Heizleistung und anschließend mit normaler Heizleistung gefahren werden, wodurch angestrebt wird, die Aufheizzeit zu verkürzen und während des Backens einen stetigen Brennerbetrieb mit wenigen Schaltvorgängen zu ermöglichen. Um dies zu ermöglichen, sind ein Zeitumschalter und ein Temperaturdifferenzumschalter vorgesehen, die wahlweise in den Vollastkreis des Brenners geschaltet werden können. Mittels eines dieser Umschalter wird entweder nach einer vorgegebenen Zeit oder nach Erreichen einer vorgegebenen Temperaturdifferenz zur Betriebstemperatur von Aufheiz-Vollastheizung auf Thermostatgesteuerte Normalheizung umgeschaltet.

Der Erfindung liegt die Aufgabe zugrunde, einen Backofen der gattungsgemäßen Art zu schaffen, der bei konstruktiv geringem Aufwand einen für unterschiedliche Backgüter optimalen Backraum-Temperatur-Verlauf ermöglicht.

Diese Aufgabe wird erfindungsgemäß durch die Merkmale im Kennzeichnungsteil des Ansprüches 1 gelöst. Durch die Erfindung wird es ermöglicht, auch in einem üblichen, normalerweise als Etagenofen ausgebildeten Backofen mit Heizgas-Umwälzung, der ein nur geringes Wärmespeichervermögen aufweist, Ist-Temperatur-Verläufe in dem oder den Backräumen zu fahren, die denen von sogenannten Steinöfen entsprechen. Die erfindungsgemäße Steuerung und Regelung ermöglicht es darüber hinaus, in besonders einfacher Weise die empirisch zu ermittelnden optimalen Temperaturverläufe für jeweils unterschiedliches Backgut zu fahren. Es kann also einerseits der Vorteil einer Betriebsweise wie bei einem Steinofen erreicht werden, andererseits aber eine Anpassung an ganz unterschiedliches Backgut vorgenommen werden, wodurch gleichermaßen ein für jedes besondere Backgut idealer Steinofen simuliert wird. Es ist hierbei möglich, eine mittlere, die Backraumtemperatur repräsentierende Temperatur zu messen, oder aber die Messungen für jeden Backraum gesondert vorzunehmen. Es ist weiterhin möglich, Ober- und Unterhitze unabhängig voneinander einzustellen.

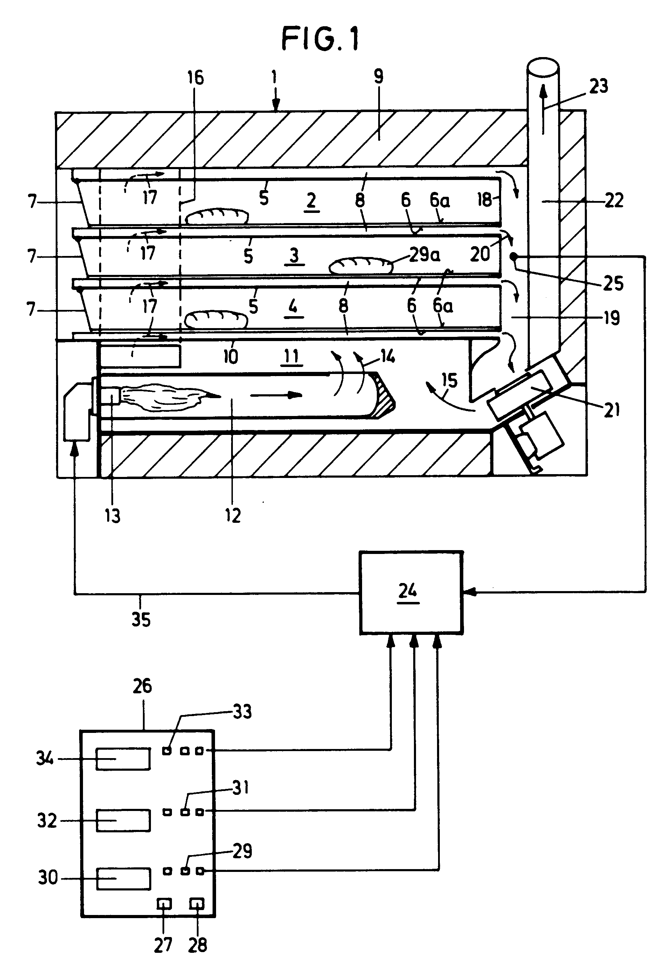

Weitere Vorteile, Merkmale und Einzelheiten der Erfindung ergeben sich aus den Unteransprüchen und der nachfolgenden Beschreibung eines Ausführungsbeispiels anhand der Zeichnung. Es zeigt
- Fig. 1: einen Backofen im Längsschnitt mit einem Steuergerät und einem Eingabe- und Anzeigegerät und
- Fig. 2: zwei unterschiedliche Soll-Temperatur-Verläufe für unterschiedliches Backgut über der Zeit.

Der in der Zeichnung dargestellte Backofen ist als sogenannter Etagenofen ausgebildet. Er weist ein Ofengehäuse 1 auf, in dem mehrere als Backräume 2,3,4 bezeichnete Herde etagenartig übereinander angeordnet sind. Jeder Backraum 2,3,4 weist eine die Oberseite begrenzende obere Strahlungsplatte 5 und auf einem Boden 6 eine untere zur Aufnahme des Backgutes dienende Backplatte 6a auf. An ihrer Vorderseite sind die Backräume 2,3,4 durch Türen 7 zugänglich. Jeder Backraum 2,3,4 wird an seiner Ober- und an seiner Unterseite von einem Heizgaskanal 8 umgeben. Zwischen den einander benachbarten Backräumen 2,3 und 3,4 werden diese Heizgaskanäle 8 also zwischen den einander benachbarten Backräumen begrenzt, während beim oberen Backraum 2 der oberste Heizkanal 8 zwischen der Ofendecke 9 und der oberen Strahlungsplatte 5 dieses Backraums 2 und beim untersten Backraum 4 zwischen dessen Boden 6 und einer Abdeckplatte 1o eines Heizgas-Mischraumes 11 begrenzt wird.

Im Bereich des Heizgas-Mischraumes 11 ist eine zylindrische Brennkammer 12 vorgesehen, in die ein Brenner 13 einmündet. Die durch die Verbrennung im Brenner 13 entstehenden heißen Rauchgase strömen entsprechend den Strömungsrichtungspfeilen 14 aus der Brennkammer 12 in den Heizgas-Mischraum 11. Dort werden sie innig mit entsprechend den Strömungsrichtungspfeilen 15 zugeführten abgekühlten Heizgasen gemischt, wodurch Heizgas mit einer entsprechenden Mischtemperatur erzeugt wird. Dieses Heizgas wird durch seitlich der Backräume 2,3,4 sich über die Höhe aller Backräume 2,3,4 erstreckende und mit allen Heizgaskanälen 8 verbundene, den Türen 7 benachbarte Heizgas-Zuführkanäle 16 den Heizgaskanälen 8 zugeführt, in die es entsprechend den Strömungsrichtungspfeilen 17 einströmt. Das Heizgas durchströmt die Heizgaskanäle 8 und tritt im Bereich der den Türen 7 entgegengesetzten Rückwände 18 der Backräume 2,3,4 in einen Heizgas-Abführkanal 19, den es entsprechend den Strömungsrichtungspfeilen 2o nach unten durchströmt. Am unteren Ende dieses Abführkanals 19 ist ein Gebläse 21 angeordnet, das den Heizgasen die zur Umwälzung erforderliche Strömungsenergie gibt. Die durch den Abführkanal 19 und das nachgeordnete Gebläse 21 strömenden Heizgase strömen - wie bereits erwähnt - zum Teil entsprechend dem Strömungsrichtungspfeil 15 in den Heizgas-Mischraum 11 zurück. Ein anderer Teil wird über einen Abgaskanal 22 ins Freie abgeblasen, und zwar in dem Umfang entsprechend dem Strömungsrichtungspfeil 23, wie vom Brenner 13 frische Heizgase erzeugt und zugeführt werden. Der bisher beschriebene Backofen ist bekannt.

Zum Betreiben, d.h. zum geregelten Heizen, des Backofens ist ein Steuergerät 24 vorgesehen, dem von einer Temperaturmeßstelle 25 im Heizgas-Abführkanal 19 ein Heizgas-Ist-Signal zugeführt wird. Dieses Signal, d.h. der dort gemessene Temperatur-Ist-Wert, ist ein Maß für die Temperatur in den Backräumen 2,3,4. Selbstverständlich können auch in den Backräumen selber entsprechende Temperaturmeßstellen vorgesehen werden, deren Werte gemittelt werden können oder die einzeln verarbeitet werden.

Dem Steuergerät 24 ist ein Eingabe- und Anzeige-Gerät 26 zugeordnet, das Tastschalter 27,28 zum Einschalten bzw. Ausschalten des gesamten Backofens aufweist. Außerdem weist es Backgut-Auswahlschalter 29 auf, mittels derer das zu backende Backgut 29a jeweils nach Backgutgruppen ausgewählt wird. Das ausgewählte Backgut 29a wird auf einer Anzeige 3o angezeigt. Weiterhin sind Backzeit-Wahlschalter 31 vorgesehen, wobei die ausgewählte Backzeit und danach während des Backens die noch verbleibende Restbackzeit auf einer Anzeige 32 angezeigt werden. Schließlich sind Temperatur-Auswahlschalter 33 vorgesehen, mit denen die Anfangs-Soll-Temperatur im jeweiligen Backraum 2,3,4 ausgewählt wird, also die Temperatur, auf die der jeweilige Backraum 2,3,4 aufgeheizt sein soll, wenn das Teigstück, also das zu backende Backgut 29a in ihn eingeschossen, d.h. eingeschoben, wird. Auf einer entsprechenden Anzeige 34 wird außer dieser eingegebenen Temperatur dann die jeweilige Ist-Temperatur angezeigt.

Das ausgewählte Backgut 29a, die ausgewählte Backzeit und die ausgewählte Anfangs-Soll-Temperatur werden vom Eingabe- und Anzeigegerät 26 als Eingänge auf das Steuergerät 24 gegeben.

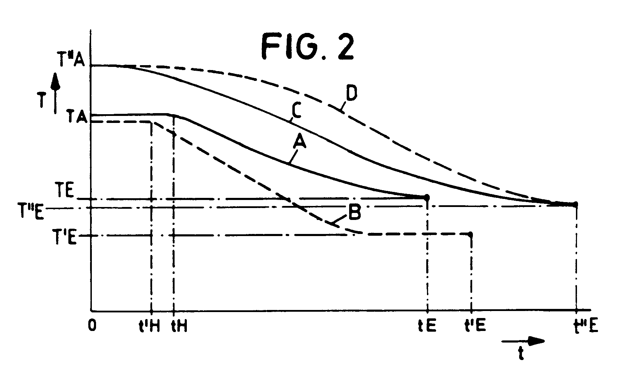

In Fig. 2 ist die Temperatur T im jeweiligen Backraum 2 bzw. 3 bzw. 4 über der Zeit t aufgetragen, wobei ein Backvorgang zur Zeit t=O beginnt. Zu diesem Zeitpunkt wird das zu backende Backgut 29a in den jeweiligen Backraum 2 bzw. 3 bzw. 4 eingeschossen, d.h. eingeschoben. Über die vorherige Auswahl eines bestimmten Backgutes 29a wird ein empirisch ermittelter und im Steuergerät 24 durch Programmierung niedergelegter Soll-Temperatur-Verlauf A über der Backzeit t ausgewählt. Diesem ausgewählten Soll-Temperatur-Verlauf A wird vom Bäcker ein Anfangstemperaturwert TA und eine Ausbacktemperatur TE zugeordnet, die über die Temperatur-Auswahlschalter 33 vorgewählt werden. Unter einer Ausbacktemperatur TE versteht man die Temperatur, bei der der Backvorgang beendet ist, bei der also das Backgut dem jeweiligen Backraum 2,3,4 entnommen wird. Außerdem ordnet der Bäcker über die Backzeit-Wahlschalter 31 dem Soll-Temperatur-Verlauf A eine Gesamtbackzeit tE zu. Wie der Kurve A zu entnehmen ist, soll während einer Aufheizphase tH mit der Zeitdauer das Backgut 29a, d.h. das zu backende Teigstück, aufgeheizt werden. Während dieser Zeit soll die Temperatur im Backraum 2 bzw. 3 bzw. 4 möglichst nicht abfallen. Danach soll sie stetig abfallen und gegen Ende des Backvorganges etwa asymptotisch in die Ausbacktemperatur te, d.h. die Temperatur, bei der das Backgut fertig ausgebacken ist, einlaufen oder sogar noch eine Zeitlang angenähert konstant auf dieser Ausbacktemperatur verbleiben.

In Fig. 2 ist gestrichelt für ein Backgut mit anderen Eigenschaften der Soll-Temperatur-Verlauf B über der Zeit dargestellt, wobei in diesem weiteren Beispiel die Anfangstemperatur TA gleich gewählt wurde, wobei aber die Dauer t′H der Aufheizphase kürzer ist. Anschließend erfolgt ein steilerer Abfall des Soll-Temperatur-Verlaufes auf die Ausbacktemperatur T′E. Auf dieser Ausbacktemperatur T′E verbleibt dann der Ofen noch eine längere Zeit bis zum Ende t′E des Backvorganges.

In Fig. 2 sind weiterhin weitere Soll-Temperatur-Verläufe C und D dargestellt, die aus Gründen der Vereinfachung der Erläuterung von derselben Anfangstemperatur T˝A ausgehen und bei derselben Ausbacktemperatur T˝E enden und für die die Backzeit t˝E jeweils gleich ist. Der Soll-Temperatur-Verlauf C ist stärker nach unten durchgebogen, fällt also steiler ab, während der Soll-Temperatur-Verlauf D stärker nach oben durchgebogen ist, also weniger abfällt. Bei der Temperaturführung entlang dem Soll-Temperatur-Verlauf D kann dem Backgut also mehr Wärme zugeführt werden als bei dem Verlauf C. Je stärker der Soll-Temperatur-Verlauf nach oben durchgebogen ist, sich also einer Asymptote mit der Anfangstemperatur T˝A nähert, um so ausgeprägter wird ein Ofen mit großem Wärmespeichervermögen simuliert, während mit zunehmend steilem Abfall dieses Verlaufes ein Ofen mit geringerem Speichervermögen simuliert wird.

Mit den Backgut-Auswahlschaltern 29 wird also ein solcher Verlauf ausgewählt, der für das jeweilige Backgut die gewünschte Wärmezufuhr zum Backgut möglichst genau wiedergibt. Durch die Temperatur-Auswahlschalter und die Backzeit-Wahlschalter wird diese Kurve gestreckt, in der Höhenlage verschoben und in ihrer Neigung verändert.

Grundsätzlich ist es auch möglich, einem bestimmten Backgut nicht nur den Soll-Temperatur-Verlauf, sondern auch die Anfangstemperatur und die Ausbacktemperatur und die Backzeit jeweils fest zuzuordnen; da die Arten des Backgutes und damit dessen Backbedingungen einer ständigen Entwicklung unterliegen, müßten zu viele vorprogrammierte derartige Soll-Temperatur-Verläufe vorgegeben werden, die dazu ständig geändert werden müßten. Aus Gründen der Praktikabilität ist daher die zuvor geschilderte Auswahl getroffen worden.

Von der Temperaturmeßstelle 25 kommen Temperaturmeßwerte, die ein Maß für die Ist-Temperatur in den Backräumen 2,3,4 sind. Bei einem Absinken des so ermittelten Ist-Temperatur-Wertes unter den durch die Kurve A oder B vorgegebenen Temperatur-Sollwert wird der Brenner 13 aufgrund eines entsprechenden Steuersignals über die Steuerleitung 35 eingeschaltet. Auf diese Weise kann die Temperatur im Backraum 2 bzw. 3 bzw. 4 über der Zeit sehr genau einem vorgegebenen Verlauf folgen.

Es können nicht nur - wie bereits angegeben - Temperaturmeßstellen in jedem Backraum 2 bzw. 3 bzw. 4 vorgesehen werden, sondern es ist auch möglich, die Temperatur der Oberhitze, also an der oberen Strahlungsplatte 5, und die Temperatur der Unterhitze, also die am Boden 6, getrennt zu erfassen und getrennt einzustellen. In diesem Fall ist es allerdings notwendig, die Beaufschlagung der Heizgaskanäle 8 einzeln regelbar zu machen. Eine gewisse vorgegebene Abstufung zwischen Oberhitze und Unterhitze kann dabei dadurch erreicht werden, daß die jeweilige Backplatte 6a ein gewisses Wärmespeichervermögen hat, so daß einerseits zu Beginn eines Backvorganges der zum Aufheizen der Teigstücke erforderliche Wärmeschub aus dem Speichervermögen der Backplatte 6a entnommen wird, während beim nachfolgenden Backvorgang die Backplatte 6a aufgrund ihrer geringeren Wärmeleitfähigkeit eine niedrigere Temperatur annimmt als die obere Strahlungsplatte 5.

## Patentansprüche

1. Backofen mit mindestens einem Backraum (2,3,4), der einen unteren Boden (6) und eine obere Strahlungsplatte (5) aufweist, mit den Backraum (2,3,4) umgebenden Heizgaskanälen (8) zum Transport von Heizgas entlang der Strahlungsplatte (5) und dem Boden (6) und mit einem Brenner (13) zum Aufheizen der Heizgase, dadurch gekennzeichnet, daß dem Backofen ein Steuergerät (24) zugeordnet ist, das den Brenner (13) entsprechend mindestens einem mindestens eine Ist-Temperatur in mindestens einem Backraum (2,3,4) repräsentierenden Temperatur-Meßwert einer Temperaturmeßstelle (25) entlang einem stetigen, abnehmenden Soll-Temperatur-Verlauf (A,B,C,D) über der Backzeit (t) ein- bzw. ausschaltet.

2. Backofen nach Anspruch 1, dadurch gekennzeichnet, daß mindestens ein Backgut-Auswahlschalter (29) zur Auswahl je eines von mehreren für unterschiedliches Backgut gespeicherten Soll-Temperatur-Verläufen (A,B,C,D) vorgesehen ist.

3. Backofen nach Anspruch 1 oder 2, dadurch gekennzeichnet, daß mindestens ein Temperatur-Auswahlschalter (33) zur Auswahl oder Veränderung der Anfangs- und/oder End-Soll-Temperatur eines Soll-Temperatur-Verlaufes (A,B,C,D) vorgesehen ist.

4. Backofen nach einem der Ansprüche 1 bis 3, dadurch gekennzeichnet, daß mindestens ein Backzeit-Wahlschalter (31) zur Auswahl oder Veränderung der einem Soll-Temperatur-Verlauf (A,B,C,D) zugeordneten Zeit vorgesehen ist.

5. Backofen mit mehreren übereinander angeordneten Backräumen (2,3,4) und mehreren in einen gemeinsamen Heizgas-Abführkanal (19) mündenden Heizgaskanälen (8), nach einem der Ansprüche 1 bis 4, dadurch gekennzeichnet, daß die Temperaturmeßstelle (25) in dem Heizgas-Abführkanal (19) angeordnet ist.

6. Backofen nach einem der Ansprüche 1 bis 5, dadurch gekennzeichnet, daß der Soll-Temperatur-Verlauf (A,B,C,D) einen Anfangs-Abschnitt etwa konstanter Temperatur (TA) für eine Aufheizphase (tH) für das zu backende Backgut aufweist.

7. Backofen nach einem der Ansprüche 1 bis 6, dadurch gekennzeichnet, daß ein Gebläse (21) zur Umwälzung der Heizgase vorgesehen ist.

## Claims

1. A baking oven with at least one baking chamber (2, 3, 4), which has a lower bottom (6) and an upper radiation plate (5), with heating gas conduits (8), surrounding the baking chamber (2, 3, 4), for the transport of heating gas along the radiation plate (5) and the bottom (6) and with a burner (13) for heating up the heating gases, characterized in that a control unit (24) is associated with the baking oven and, along a continuous, declining march of desired temperature (A, B, C, D) over the baking time (t), turns the burner (13) on or off in conformity with at least one measured value of temperature of a temperature measuring point (25), which measured value of temperature represents at least one actual temperature in at least one baking chamber (2, 3, 4).

2. A baking oven according to claim 1, characterized in that at least one baked goods selection switch (29) is provided for the selection of one out of a plurality of marches of desired temperature (A, B, C, D) stored for different baked goods.

3. A baking oven according to claim 1 or 2, characterized in that at least one temperature selection switch (33) is provided for the selection or modification of the initial and/or final desired temperature of a march of desired temperature (A, B, C, D).

4. A baking oven according to one of claims 1 to 3, characterized in that at least one baking time selection switch (31) is provided for the selection or modification of the time associated with a march of desired temperature (A, B, C, D).

5. A baking oven with several baking chambers (2, 3, 4) arranged one above the other and with several heating gas conduits (8) opening into a common heating gas discharge conduit (19) according to one of claims 1 to 4, characterized in that the temperature measuring point (25) is arranged in the heating gas discharge conduit (19).

6. A baking oven according to one of claims 1 to 5, characterized in that the march of desired temperature (A, B, C, D) has an initial section of about constant temperature (TA) for a heating-up phase (tH) of the goods to be baked.

7. A baking oven according to one of claims 1 to 6, characterized in that a fan (21) is provided for the recirculation of the heating gases.

## Revendications

1. Four de boulanger avec au moins un espace de four (2, 3, 4), qui présente un fond inférieur (6) et une plaque supérieure (5) à radiation, avec des conduits (8) à gaz de chauffage entourant l'espace de four (2, 3, 4) pour le transport de gaz de chauffage le long de la plaque (5) de radiation et le fond (6) et avec un brûleur pour chauffer les gaz de chauffage, caractérisé en ce qu'un dispositif de commande est conjugué au four, qui, le long d'une allure, continue et décroissante, de température nominelle (A, B., C, D) sur le temps de cuisson (t), met en marche ou débranche le brûleur (13) conformément à au moins une valeur mesurée de température, représentant au moins une température réelle dans au moins un espace du four (2, 3, 4), d'un point de mesure de température (25).

2. Four selon la revendication 1, caractérisé en ce qu'au moins un commutateur (29) pour sélectionner les produits à cuire est prévu pour la sélection d'une de plusieurs allures de température nominelle (A, B, C, D) mises en mémoire pour les différents produits à cuire.

3. Four selon la revendication 1 ou 2, caractérisé en ce qu'au moins un commutateur (33) pour sélectionner la température est prévu pour la sélection ou la modification de la température initiale et/ou finale d'une allure de température nominelle (A, B, C, D).

4. Four selon l'une quelconque des revendications 1 à 3, caractérisé en ce qu'au moins un commutateur (31) pour sélectionner le temps de cuisson est prévu pour la sélection ou la modification du temps conjugué à une allure de température nominelle (A, B, C, D).

5. Four avec plusieurs espaces de four (2, 3, 4) arrangés l'un au-dessus de l'autre et plusieurs conduits (8) à gaz de chauffage débouchant dans un conduit commun (19) d'évacuation du gaz de chauffage selon l'une quelconque des revendications 1 à 4, caractérisé en ce que le point de mesure de température (25) est arrangé dans le conduit (19) d'évacuation du gaz de chauffage.

6. Four selon l'une quelconque des revendications 1 à 5, caractérisé en ce que l'allure de température nominelle (A, B, C, D) présente une étape initiale de température constante (TA) pour une phase d'échauffement (tH) pour les produits à cuire.

7. Four selon l'une quelconque des revendications 1 à 6, caractérisé en ce qu'une soufflante (21) est prévue pour la recirculation des gaz de chauffage.
